# FASCICULE DE BREVET EUROPEEN

(11) **EP 1 999 933 B1**
(45) Date de publication et mention de la délivrance du brevet: **18.11.2009**
(21) Numéro de dépôt: 07731751.9
(22) Date de dépôt: 16.03.2007
(51) Int. Cl.: H04L 29/08, H04N 7/00, H04L 12/28

(54) **PROCEDE D'ADAPTATION DE PROFIL UTILISATEUR COMMUN**
VERFAHREN ZUR ADAPTIERUNG EINES GEMEINSAMEN BENUTZERPROFILS
METHOD FOR ADAPTING A COMMON USER PROFILE

(30) Priorité: 20.03.2006 FR 0650945
(43) Date de publication de la demande: 10.12.2008
(73) Titulaire: Alcatel Lucent, 75008 Paris (FR)
(72) Inventeur: MARILLY, Emmanuel, F-91240 Saint-Michel-Sur-Orge (FR); DELEGUE, Gérard, F-94230 Cachan (FR)
(74) Mandataire: Hedarchet, Stéphane
(86) Numéro de dépôt international: PCT/FR2007/050935
(87) Numéro de publication internationale: WO 2007/107662

(56) Documents cités:
- YU ZHIWEN ET AL: "An Adaptive In-Vehicle Multimedia Recommender for Group Users" VEHICULAR TECHNOLOGY CONFERENCE, 2005. VTC 2005-SPRING. 2005 IEEE 61ST STOCKHOLM, SWEDEN 30-01 MAY 2005, PISCATAWAY, NJ, USA,IEEE, 30 mai 2005 (2005-05-30), pages 2800-2804, XP010855960 INTERNET ISBN: 0-7803-8887-9
- YU ZHIWEN ET AL.: "User Profile Merging Based on Total Distance Minimization" ICOST '2004, 2ND INTERNATIONAL CONFERENCE ON SMART HOMES AND HEALTH TELEMATICS, septembre 2004 (2004-09), pages 1-8, XP007901150 INTERNET
- SALEM B ET AL.: "Multiple User Profile Merging (MUPE): Key Challenges for Environment Awareness" AMBIENT INTELLIGENCE. SECOND EUROPEAN SYMPOSIUM, EUSAI 2004. PROCEEDINGS, novembre 2004 (2004-11), pages 196-206, XP007901154 INTERNET

## Description

L'invention concerne le domaine de la création et de l'utilisation de profil d'utilisateur pour la fourniture de service, et en particulier de service vidéo et / ou audio destiné à la diffusion. Le profil utilisateur est notamment utilisé lorsqu'est ajouté au service diffusé, soit de l'interactivité, soit un service personnalisé. La partie interactive ou la partie personnalisée, qui est ajoutée à la partie commune diffusée du service, dépend du profil utilisateur du terminal sur lequel la partie commune du service est diffusée, laquelle partie commune est la même pour l'ensemble des terminaux, ou à tout le moins pour un grand nombre de terminaux, ayant demandé te service considéré. Par exemple; la partie commune diffusée peut être une émission de télévision, tandis que la partie ajoutée peut être une interaction ou une publicité particulière, ou les deux à le fois d'ailleurs.

Les profils utilisateurs sont généralement des profils utilisateurs individuels, c'est-à-dire que chaque utilisateur est associé à un terminal auquel est associé un profil utilisateur. Des groupes d'utilisateurs peuvent également être constitués, mais ils se présentent sous la forme d'un groupe de profils utilisateurs individuels comprenant des règles permettant la gestion du groupe tout en prenant en compte les spécificités des profils utilisateurs individuels.

L'invention s'intéresse à un cas particulier, celui où plusieurs utilisateurs vont être amenés à devoir partager un terminal, dit terminal commun, car commun à plusieurs utilisateurs. Dans ce cas là, toute gestion individuelle de l'ensemble des profils utilisateurs associés aux différents utilisateurs partageant le terminal commun est considéré par l'invention comme non optimale. En effet, chaque manipulation liée à un profil utilisateur va devoir tenir compte de règles complexes mettant en relation les différents profils utilisateurs individuels. L'invention propose au contraire l'établissement d'un profil utilisateur commun, commun à l'ensemble des utilisateurs associés au terminal commun, le fournisseur de service ne voyant plus que ce profil utilisateur commun et oubliant les différents profils utilisateurs individuels. D'où un fonctionnement simple et redevenu classique pour le fournisseur de service qui ne voit plus qu'un profil utilisateur comme d'habitude, la seule différence étant que ce profil utilisateur, représente une communauté et non plus un individu. Par conséquent, en plus des modifications classiques de profil utilisateur à la demande de l'utilisateur ou de l'opérateur de télécommunications gérant le ou les terminaux associés aux utilisateurs, le profil utilisateur commun doit encore être adapté dès que la composition de la communauté d'utilisateurs change, ou à tout le moins dès que la composition de la communauté d'utilisateurs change suffisamment pour entraîner un changement substantiel dans le profil utilisateur commun. La modification de la communauté d'utilisateurs entraînera ainsi une adaptation interactive et dynamique du profil utilisateur commun.

Le document YU ZHIWEN ET AL: "An Adaptive In-Vehicle Multimedia Recommender for Group Users" VEHICULAR TECHNOLOGY CONFERENCE, 2005. VTC 2005-SPRING. 2005 IEEE 61 ST STOCKHOLM, SWEDEN 30-01 MAY 2005, PISCATAWAY, NJ, USA,IEEE, 30 mai 2005 (2005-05-30), pages 2800-2804, XP010855960 INTERNET ISBN: 0-7803-8887-9 propose un système adaptatif de recommandation multimédia intra-véhiculaire utilisé pour des groupes d'utilisateurs. Il présente l'architecture.du système de recommandation. Les principales technologies : identification des utilisateurs et agrégation de profils, algorithme de fusion de profiles d'utilisateur, et stratégie de recommandation sont décrits.

L'invention propose à la fois d'une part un procédé permettant de changer de manière avantageuse de profil utilisateur commun en modifiant le profil utilisateur commun utilisé et d'autre part un procédé permettant de changer de manière avantageuse de profil utilisateur commun en utilisant un autre profil utilisateur commun déjà stocké.

Selon l'invention, il est prévu un procédé d'adaptation de profil utilisateur commun utilisé par un fournisseur due service audio et/ou vidéo diffusé sur un terminal commun pour personnaliser le service fourni, comprenant : une étape de détection d'au moins un nouveau terminal dans le voisinage du terminal commun ; une étape de validation d'au moins un nouveau terminal détecté à au moins la première condition qu'il soit destiné à rester au voisinage du terminal commun pendant une durée compatible avec la personnalisation du service fourni ; une étape de détermination d'un ou de plusieurs profils utilisateurs correspondant à un ou plusieurs nouveaux terminaux validés ; une étape de corrélation du ou des profils utilisateurs déterminés avec un ou plusieurs paramètres représentatifs du profil utilisateur commun utilisé par le fournisseur de service de manière à obtenir un nouveau profil utilisateur commun ; une étape d'utilisation, par le fournisseur de service, du nouveau profil utilisateur commun au moins si le nouveau profil utilisateur commun est suffisamment différent du profil utilisateur commun utilisé par le fournisseur de service, pour modifier la personnalisation du service fourni. De manière similaire, lorsqu'un terminal disparaît du voisinage du terminal commun, l'invention propose un procédé d'adaptation de profil utilisateur commun. C'est un procédé d'adaptation de profil utilisateur commun utilisé par un fournisseur de service audio et/ou vidéo diffusé sur un terminal commun pour personnaliser le service fourni, comprenant : une étape de détection de la disparition, d'au moins un terminal; du voisinage du terminal commun ; une. étape de validation d'au moins un terminal détecté disparu à au moins la première condition qu'il soit destiné à rester hors du voisinage du terminal commun pendant une durée compatible avec la personnalisation du services fourni ; une étape de corrélation du ou des profils utilisateurs correspondant à des terminaux destinés à rester au voisinage du terminal commun pendant une durée compatible avec la personnalisation du service fourni de manière à obtenir un nouveau profit utilisateur commun ; une étape d'utilisation, par le fournisseur de service, du nouveau profil utilisateur commun au moins si le nouveau profil utilisateur commun est suffisamment différent du profil utilisateur commun utilisé par le fournisseur de service, pour modifier la personnalisation du service fourni. L'ajout d'un ou de plusieurs terminaux et le retrait simultané d'un ou de plusieurs terminaux sont préférentiellement traités par le procédé selon l'invention globalement et simultanément, à l'intérieur d'un même serveur d'application.

Selon l'invention, il est aussi prévu un procédé d'adaptation de profil utilisateur commun utilisé par un fournisseur de service audio et/ou vidéo diffusé sur un terminal commun pour personnaliser le service fourni, comprenant : une étape de détection d'au moins un nouveau terminal dans le voisinage du terminal commun ; une étape de validation d'au moins un nouveau terminal détecté à au moins la première condition qu'il soit destiné à rester au voisinage du terminal commun pendant une durée compatible avec la personnalisation du service fourni ; une étape de détermination d'un ou de plusieurs profils utilisateurs correspondant à un ou plusieurs nouveaux terminaux validés ; une étape d'utilisation, par le fournisseur de service, d'un nouveau profil utilisateur commun préalablement stocké correspondant à l'ensemble des terminaux encore validés, pour modifier la personnalisation du service fourni. Parmi les terminaux encore validés, on compte les terminaux nouvellement validés tout comme les terminaux qui une fois validés précédemment n'ont pas été détectés disparus avec validation de leur disparition. De manière similaire, lorsqu'un terminal disparaît du voisinage du terminal commun, l'invention propose un procédé d'adaptation de profil utilisateur commun. C'est un procédé d'adaptation de profil utilisateur commun utilisé par un fournisseur de service audio et/ou vidéo diffusé sur un terminal commun pour personnaliser le service fourni, comprenant : une étape de détection de la disparition, d'au moins un terminal, du voisinage du terminal commun ; une étape de validation d'au moins un terminal détecté disparu à au moins la première condition qu'il soit destiné à rester hors du voisinage du terminal commun pendant une durée compatible avec la personnalisation du service fourni ; une étape d'utilisation, par le fournisseur de service, d'un nouveau profil utilisateur commun préalablement stocké correspondant à l'ensemble des terminaux encore destinés à rester au voisinage du terminal commun pendant une durée compatible avec la personnalisation du service fourni, pour modifier la personnalisation du service fourni. L'ajout d'un ou de plusieurs terminaux et le retrait simultané d'un ou de plusieurs terminaux sont préférentiellement traités par le procédé selon l'invention globalement et simultanément, à l'intérieur d'un même serveur d'application.

L'invention sera mieux comprise et d'autres particularités et avantages apparaîtront à l'aide de la description ci-après et des dessins joints, donnés à titre d'exemples, où :
- la figure 1 représente schématiquement un exemple d'utilisation du procédé selon l'invention avec un terminal commun et plusieurs terminaux individuels ;
- la figure 2 représente schématiquement un exemple d'implémentation du procédé selon l'invention.

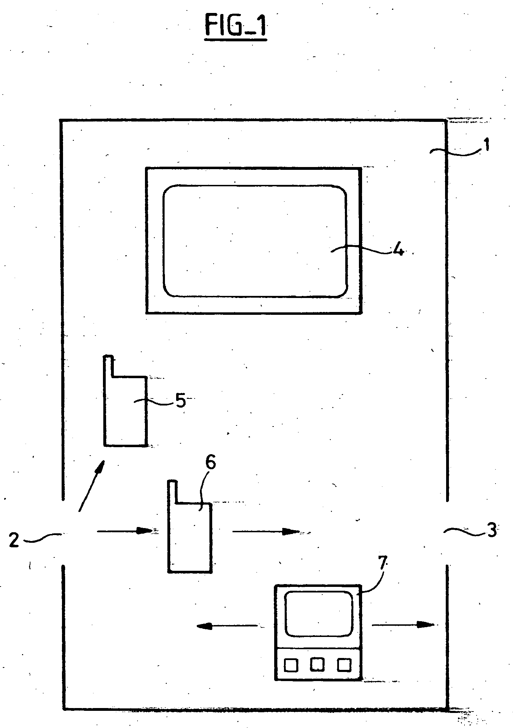

La figure 1 représente schématiquement un exemple d'utilisation du procédé selon l'invention avec un terminal commun et plusieurs terminaux individuels. Une pièce d'habitation 1, par exemple un salon, présente deux ouvertures 2 et 3, par exemple des portes, par lesquelles sont susceptibles d'entrer et de sortir des utilisateurs ainsi que les terminaux qu'ils transportent. Dans la pièce 1 se trouve un terminal commun 4, par exemple la télévision du salon que peuvent être amenés à regarder simultanément plusieurs membres de la famille résidant dans l'habitation. Plusieurs terminaux 5 à 7 se trouvent à un moment donné dans la pièce 1, par exemple deux téléphones mobiles 5 et 6 ainsi qu'un assistant personnel numérique 7 (PDA pour « Personal Digital Assistant » en langue anglaise). Ces terminaux mobiles sont associés chacun à un utilisateur. Ainsi, la présence du terminal 5, 6 ou 7, dans la pièce 1, est révélatrice de la présence de l'utilisateur respectivement associé audit terminal.

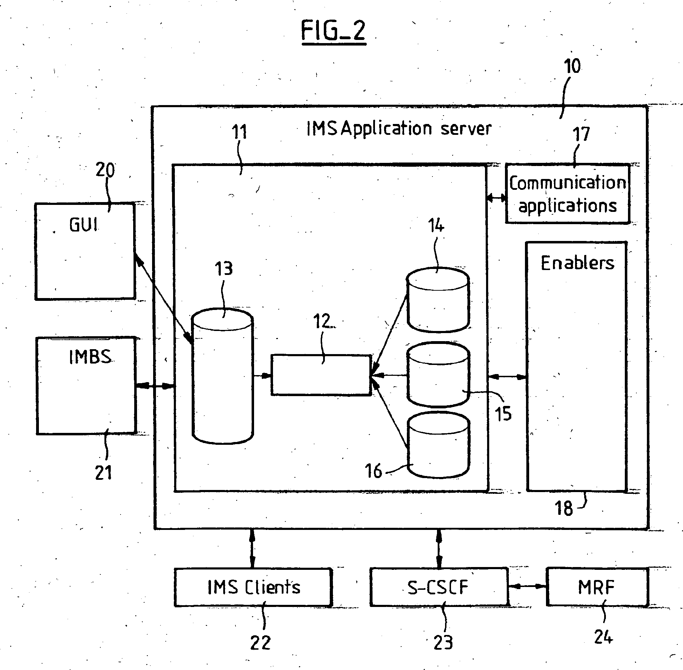

Dans la pièce 1, un profil utilisateur commun est utilisé par un fournisseur de service audio et/ou vidéo diffusé sur le terminal commun 4 pour personnaliser le service fourni. Ici, le profil utilisateur commun correspond par exemple au profil utilisateur du terminal 7 lequel est en mouvement continu dans la pièce 1 ; c'est par exemple le père de famille qui fait le ménage dans la pièce 1 tout en regardant la télévision de temps à autre. Le profil utilisateur commun pourrait déjà être la corrélation de plusieurs profils utilisateurs individuels si plusieurs terminaux se trouvaient déjà dans la pièce 1. A ce moment, entre dans la pièce 1. un utilisateur portant le terminal 5 qui devient rapidement immobile pendant un long moment ; c'est par exemple la mère de famille qui s'est installée dans un fauteuil pour regarder la télévision. Un système de détection non représenté sur la figure 1, indépendant du terminal commun 4 ou bien intégré au terminal commun 4, détecte l'entrée dans la pièce 1 du terminal 5. Dans une autre réalisation, c'est le terminal 5 qui peut se signaler audit système de détection ou bien même directement au terminal commun 4. La présence prolongée du terminal 5. au voisinage du terminal commun 4 est détectée, ou bien une demande émane du terminal 5, ce qui laisse présumer que l'utilisateur du terminal 5 est intéressé par ce qui se passe au niveau du terminal commun 4. Le voisinage du terminal commun signifie de préférence un espace autour du terminal commun dans lequel l'utilisateur d'un terminal est susceptible de pouvoir profiter au moins en partie du service diffusé sur le terminal commun. A condition que le terminal 5 soit destiné à rester au voisinage du terminal commun 4 pendant une durée compatible avec la personnalisation du service fourni au niveau du terminal commun 4, ce qui est le cas soit si le terminal 5 se signale activement soit si le terminal 5 reste longtemps au voisinage du terminal commun 4, ici en l'occurrence dans la pièce 1, ce terminal est validé, c'est-à-dire que l'on considère que son utilisateur est intéressé par le service diffusé au niveau du terminal commun 4. La prochaine étape, ou l'une des prochaines étapes, de personnalisation du service fourni, va tenir compte du terminal 5. Pour que cela présente un intérêt, il faut que le temps prévisible de présence du terminal 5 dans la pièce 1 ne soit pas trop court, de manière à permettre la personnalisation du service fourni ; en effet, si le temps que le service puisse être personnalisé en tenant compte de l'utilisateur du terminal 5, cet utilisateur et son terminal 5 sont déjà ressortis de la pièce 1, la modification de la personnalisation ne présente aucun intérêt. Par exemple, le terminal 5 est supposé demeurer dans la pièce 1, au moins le temps qu'une ou plusieurs personnalisations, par exemple des messages publicitaires, du service diffusé sur le terminal commun 4, par exemple vidéo, ait pu être vu par l'utilisateur du terminal 5. Une fois que le terminal 5 a été validé, s'il respecte au moins la première condition détaillée ci-dessus et le cas échéant une ou plusieurs autres conditions éventuelles, le profil utilisateur 5 est utilisé pour obtenir un nouveau profil utilisateur commun d'une manière qui sera détaillée lors de la description de la figure 2. Le nouveau profil utilisateur commun correspond à une corrélation des profils utilisateurs respectivement associés au terminaux 5 et 7. A ce moment là, supposons qu'un autre utilisateur traverse la pièce 1 en entrant par la porte 2 et en ressortant peu de temps après par la porte 3. Bien sûr, cet utilisateur ne se signale pas activement auprès du terminal commun 4, car il n'est pas intéressé par le service qui y est diffusé. L'éventuel système de détection de terminaux à valider détecte effectivement le terminal 6 dès son entrée dans la pièce 1. Toutefois, comme rapidement, c'est-à-dire dans un temps trop court pour permettre une personnalisation du service diffusé à l'aide du profil utilisateur correspondant au terminal 6 et la visualisation pendant un temps suffisant de ce service personnalisé également pour l'utilisateur du terminal 6, comme par exemple avant l'expiration d'une période de temps prédéterminée, le terminal 6 n'est à nouveau plus détecté par le système de détection, le nouveau profil utilisateur commun du terminal commun 4 reste identique et n'est donc pas modifié pour tenir compte des spécificités du profil utilisateur associé au terminal 6. D'autres condition que la discrimination entre utilisateurs stationnaires auprès du terminal commun et utilisateurs passants peuvent être utilisées pour déclencher ou non un recalcul du profil utilisateur commun. Une fois qu'un nouveau terminal est détecté et qu'il est supposé être stationnaire auprès du terminal commun, le système peut vérifier une ou plusieurs autres conditions pour ce terminal avant de recalculer le profil utilisateur commun, de manière à ce que le gain espéré par le fournisseur de service au travers de la modification de la personnalisation du service diffusé soit supérieur au simple coût de recalcul du profil utilisateur commun. D'autres conditions basées sur le nombre ou la proportion de nouveaux terminaux détectés seront détaillées ultérieurement.

Un exemple concret et imagé de modification du profil utilisateur commun va maintenant être présente. Alice regarde un match de football à la télévision du domicile familial, bien installée dans un fauteuil du salon. Grâce à son téléphone mobile qu'elle possède dans sa poche, Alice a été détectée et son profil utilisateur va constituer le profil utilisateur commun associé à la télévision. Le profil utilisateur d'Alice indique que c'est une femme qui aime la bière et le chocolat. Des publicités concernant des marques de bière lui seront affichées à l'écran pendant le match de football. Son fils Bob entre à son tour dans le salon pour la deuxième mi-temps du match de football et s'installe dans le canapé. Bob est détecté grâce au PDA avec lequel il joue tout en regardant le match de football. Le profil utilisateur de Bob indique que c'est un jeune homme qui aime le chocolat et la limonade. La corrélation entre les profils utilisateurs d'Alice et de Bob fait apparaître un point commun tous deux aiment la chocolat. Pendant la deuxième mi-temps du match de football, des publicités concernant différentes marques de chocolat leur seront affichées à l'écran.

Tout profil utilisateur commun, incluant un certain nombre d'utilisateurs, surtout lorsqu'il est stocké, peut comprendre par exemple tout ou partie des éléments suivants : nombre d'utilisateurs inclus dans le profil utilisateur commun, les âges des différents utilisateurs inclus dans le profil utilisateur commun, la moyenne d'âge du groupe constitué par les différents utilisateurs inclus dans le profil utilisateur commun, leur localisation respective à un moment donné, leur centre d'intérêt commun, le type de programme de télévision habituellement regardé en commun, le type de communauté que ces utilisateurs constituent (une famille, un groupe d'amis, ...), tous les profils utilisateurs individuels, le type de service généralement requis, etc ...

La figure 2 représente schématiquement un exemple d'implémentation du procédé selon l'invention. Les flèches représentent des échanges d'informations.

Un serveur d'application IMS 10 (IMS pour « Internet protocol Multimedia Subsystem » en langue anglaise) peut notamment être relié à une interface graphique utilisateur GUI (GUI pour « Guide User Interface » en langue anglaise) 20 permettant aussi bien aux utilisateurs qu'à l'opérateur de définir les politiques de détermination de profil utilisateur commun, à une plate-forme de gestion de télévision interactive 21, de préférence de type IMBS (IMBS pour « Interactive Mobile Broadcast Service ») mais pouvant aussi être de type fixe, permettant de rajouter des fonctionnalités interactives à un contenu d'émission de télévision diffusé, à des clients IMS 22 situés dans les terminaux des utilisateurs permettant au serveur d'application IMS 10 de les détecter, à des fournisseurs 24 de services multimédia, par exemple audio et vidéo, par l'intermédiaire de serveurs 23 à fonction de contrôle d'état d'appel (S-CSCF pour « Serving Call State Control Function ») notamment chargés de fournir la session de contrôle des services d'un utilisateur et de maintenir les états de la session d'un utilisateur enregistré, lesdits services multimédia pouvant être affichés sur les terminaux communs.

Un serveur d'application IMS 10 (IMS pour « Internet protocol Multimedia Subsystem » en langue anglaise) comprend un serveur d'application « profile utilisateur commun » 11, un groupe d'applications de communication 17 et un ensemble de facilitateurs 18. Le procédé selon l'invention peut aussi être implémenté au niveau d'un serveur d'application non IMS, comme par exemple au niveau d'une plateforme de gestion réseau, notamment de type vidéo sur demande en ADSL (ADSL pour « Asymetric Digital Subscriber Line » en langue anglaise) ou bien encore télévision interactive en ADSL. L'utilisation d'un serveur d'application IMS reste cependant avantageuse car elle facilite la correspondance entre d'une part l'identifiant d'un terminal individuel et d'autre part le profil utilisateur individuel associé audit terminal individuel. Le groupe d'applications de communication 17 peut notamment comprendre des applications permettant des interactions avec l'utilisateur, par exemple le PTT (PTT pour « push to talk » en langue anglaise). L'ensemble de facilitateurs 18 peut notamment comprendre un service d'AAC (AAC pour « Authentication and Access Control » en langue anglaise) chargé d'effectuer le contrôle d'accès, un service de présence permettant de savoir si la personne est disponible et quels sont ses moyens de communication disponibles, un service de GLMS chargé de gérer les listes d'utilisateurs, un service de facturation, un service de contrôle de qualité de service, un service de localisation donnant des informations relatives aux lieux où se trouvent les différents utilisateurs, qui accompagnent généralement la fourniture de services multimédia au sein d'un serveur d'application IMS 10.

Le serveur d'application « profile utilisateur commun » 11 comprend un moteur de règles 12, un répertoire 13 de politiques de détermination de profil utilisateur commun, un répertoire 14 de profils utilisateurs individuels, un répertoire 15 de terminaux communs, un répertoire 16 de profils utilisateurs communs.

Le serveur d'application « profile utilisateur commun » 11 détermine de préférence à l'aide du répertoire 14 de profils utilisateurs individuels les profils utilisateurs correspondant aux nouveaux terminaux détectés et validés, appelés dans la suite du texte nouveaux profils utilisateurs individuels. Ces profils utilisateurs peuvent aussi être demandés directement à un serveur HSS (HSS pour « Home Subscriber Server » en langue anglaise) non représenté sur la figure 2 qui contient les profils utilisateurs individuels associés aux terminaux. D'une manière pratique, le serveur d'application « profile utilisateur commun » 11 aura avantageusement recours au serveur HSS au moins la première fois pour remplir le répertoire 14 de profils utilisateurs individuels.

Le répertoire 15 des terminaux communs indique pour chaque terminal commun une référence à un profil utilisateur commun. Le répertoire 16 des profils utilisateurs communs comprend les profils utilisateurs communs déjà associés à des terminaux communs. Pour un terminal commun donné, grâce au répertoire 15 des terminaux communs, le serveur d'application « profile utilisateur commun » 11 obtient une référence de profil utilisateur commun. Grâce à cette référence, le serveur d'application « profile utilisateur commun » 11 obtient, à l'aide du répertoire 16 des profils utilisateurs communs, le dernier profil utilisateur commun associé au terminal commun considéré, appelé dans la suite du texte ancien profil utilisateur commun.

A l'aide d'une part du répertoire 13 des politiques de détermination de profil utilisateur commun, qui contient les politiques expliquant comment un nouveau profil utilisateur commun doit être déterminé à partir d'un ou de plusieurs profils utilisateurs individuels destinés à être ajoutés à ou retranchés d'un ancien profil utilisateur commun, et d'autre part à la fois de l'ancien profil utilisateur commun et du ou des nouveaux profils utilisateurs individuels, le moteur de règles 12 est capable de déterminer le nouveau profil utilisateur commun qui sera ensuite utilisé au niveau du terminal commun considéré. De manière plus générale, une corrélation du ou des profils ,utilisateurs déterminés avec un ou plusieurs paramètres représentatifs du profil utilisateur commun utilisé par le fournisseur de service est effectué de manière à obtenir un nouveau profil utilisateur commun. Des exemples de paramètres représentatifs sont donnés ultérieurement.

Le nouveau profil utilisateur commun peut soit être systématiquement utilisé par le fournisseur de service pour modifier la personnalisation du service fourni, soit n'être utilisé que si le nouveau profil utilisateur commun est suffisamment différent du profil utilisateur commun utilisé par le fournisseur de service. En effet, si la modification de la personnalisation du service apparat négligeable à l'opérateur ou imperceptible aux utilisateurs, le procédé selon l'invention peut ne pas tenir compte du nouveau profil utilisateur commun et choisir de garder et de continuer à utiliser l'ancien profil utilisateur commun.

Il n'est pas forcément nécessaire pour le moteur de règles 12, de devoir recalculer systématiquement un nouveau profil utilisateur commun. Il lui est possible d'aller chercher dans le répertoire 16 des profils utilisateurs communs, un profil utilisateur commun correspondant à l'ensemble des profils utilisateurs associés à des terminaux encore validés à un moment donné, à condition que ce profil d'utilisateur commun ait été préalablement stocké dans le répertoire 16 des profils utilisateurs communs. Par exemple à un moment donné, un terminal commun est associé à un profil utilisateur commun correspondant à trois profils utilisateurs individuels Alain, Bernard et Christophe. Christophe quitte le voisinage du terminal commun. Au lieu de recalculer le nouveau profil utilisateur commun, le moteur de règles 12 va simplement voir dans le répertoire 16 de profils utilisateurs communs si celui-ci ne contient pas déjà un profil utilisateur commun correspondant aux profils utilisateurs individuels Alain et Bernard.

Le service diffusé, audio et / ou vidéo, est de préférence un service au moins vidéo, c'est-à-dire qu'il comprend préférentiellement de la vidéo. Un service purement audio reste possible mais est moins intéressant car nettement moins riche en contenu et donc moins intéressant du point de vue de la personnalisation du service. Dans une réalisation, le service vidéo comprend un envoi de séquence publicitaire vidéo ou cours d'une émission télévisée. Dans une autre réalisation, le service vidéo comprend un envoi de questions vidéo interactives au cours d'une émission télévisée. Les deux réalisations peuvent aussi être combinées entre elles à l'intérieur d'un même service.

Pour l'étape de détection et l'étape de validation, notamment deux modes de réalisation peuvent être envisagés, soit alternativement, soit cumulativement, c'est-à-dire que les modes peuvent éventuellement coexister au niveau d'un terminal commun. Dans un premier mode de réalisation, d'une part l'étape de détection correspond à une détection passive de la part du terminal détecté et d'autre part l'étape de validation est réalisée si ledit terminal détecté reste détectable pendant une période de temps prédéterminée. Ce temps minimum de latence est un moyen de vérifier, sinon la volonté du moins une probabilité raisonnable de volonté, soit d'appartenir au groupe d'utilisateurs définissant le profil utilisateur commun associé au terminal commun, soit au moins d'appartenir au groupe d'utilisateurs profitant effectivement du service diffusé sur le terminal commun. Ce temps minimum de latence permet également d'éviter de recalculer continuellement des nouveaux profils utilisateurs communs qui ne présentent aucun intérêt pratique car ils ne sont pas destinés à durer suffisamment longtemps pour être rentabilisés d'un point de vue financier pour le fournisseur de service diffusé. Dans un deuxième mode de réalisation, d'une part l'étape de détection correspond à une signalisation active de la part du terminal détecté et d'autre part l'étape de validation est alors automatiquement réalisée. En cas de coexistence, la règle de priorité peut notamment être la suivante : si le mode « actif » est activé, il est utilisé, sinon le mode « passif » est utilisé.

Pour l'étape de validation, la condition de stationnement du terminal individuel dans le voisinage du terminal commun doit être vérifiée mais elle n'est pas nécessairement la seule condition à devoir être vérifiée. Une deuxième condition tendant à mesurer la perturbation attendue sur le profil utilisateur commun par l'intégration d'un ou de plusieurs nouveaux profils utilisateurs individuels est de préférence utilisée également, afin d'éviter de recalculer sans arrêt le profil utilisateur commun alors que l'on estime que le résultat du recalcul donnera une différence infime. Dans un mode de réalisation, l'étape de validation vérifie aussi une deuxième condition de nombre minimum, strictement supérieur à un, de nouveaux terminaux vérifiant la première condition. Dans un autre mode de réalisation, l'étape de validation vérifie aussi une deuxième condition de proportion minimum de nouveaux terminaux vérifiant la première condition par rapport à l'ensemble des terminaux constituant le profil utilisateur commun utilisé par le fournisseur de service. Un exemple de proportion minimum peut être 10%, notamment dans des situations où le nombre d'utilisateurs est élevé, par exemple dans la situation où le terminal commun est dans un lieu public comme un aéroport ou un hall de gare ou une station de métro par exemple.

Lors de l'opération de corrélation, les nouveaux profils utilisateurs individuels sont corrélés avec un ou plusieurs paramètres représentatifs de l'ancien profil utilisateur commun. Dans un mode de réalisation, le ou les paramètres représentatifs sont le ou les profils utilisateurs des terminaux constituant le profil utilisateur commun utilisé par le fournisseur de service. Dans ce cas, le nouveau profil utilisateur commun est directement recalculé à partir de l'ensemble des profils utilisateurs individuels devant être associés au terminal commun. Ce mode de réalisation présente l'avantage d'une plus grande finesse dans la détermination du nouveau profil utilisateur commun. Dans un autre mode de réalisation, le ou les paramètres représentatifs sont le profil utilisateur commun utilisé par le fournisseur de service. Dans ce cas, le nouveau profil utilisateur commun est obtenu par application d'une perturbation à l'ancien profil utilisateur commun, la perturbation correspondant au(x) nouveau(x) profil(s) utilisateur(s) individuel(s). Ce mode de réalisation présente l'avantage d'un moindre coût dans la détermination du nouveau profil utilisateur commun, mais est un peu plus grossière au niveau de la détermination du nouveau profil utilisateur commun.

La corrélation entre profils utilisateurs peut être réalisée de nombreuses manières différentes. A titre d'exemple, dans une réalisation, l'étape de corrélation intègre une fonction d'intersection d'au moins certaines caractéristiques de profils utilisateurs. Dans une autre réalisation, l'étape de corrélation intègre une fonction d'exclusion d'au moins certaines caractéristiques de profils utilisateurs en cas de présence de profils utilisateur prioritaires. Dans encore une autre réalisation, l'étape de corrélation intègre une fonction de calcul de barycentre d'au moins certaines caractéristiques de profils utilisateurs. Plusieurs, voire toutes, ces différentes réalisations sont cumulables entre elles.

## Revendications

1. Procédé d'adaptation de profil utilisateur commun utilisé par un fournisseur de service audio et/ou vidéo diffusé sur un terminal commun (4) pour personnaliser le service fourni, comprenant :
- une étape de détection d'au moins un nouveau terminal (5, 6 ou 7) dans le voisinage du terminal commun;
- une étape de validation d'au moins un nouveau terminal détecté à au moins la première condition qu'il soit destiné à rester au voisinage du terminal commun pendant une durée compatible avec la personnalisation du service fourni ;
- une étape de détermination d'un ou de plusieurs profils utilisateurs correspondant à un ou plusieurs nouveaux terminaux validés;
- une étape de corrélation du ou des profils utilisateurs déterminés avec un ou plusieurs paramètres représentatifs du profil utilisateur commun utilisé par le fournisseur de service de manière à obtenir un nouveau profil utilisateur commun;
- une étape d'utilisation, par le fournisseur de service, du nouveau profil utilisateur commun au moins si le nouveau profil utilisateur commun est suffisamment différent du profil utilisateur commun utilisé par le fournisseur de service, pour modifier la personnalisation du service fourni.

2. Procédé d'adaptation de profil utilisateur commun selon la revendication 1, **caractérisé en ce que** le ou les paramètres représentatifs sont le ou les profils utilisateurs des terminaux constituant le profil utilisateur commun utilisé par le fournisseur de service.

3. Procédé d'adaptation de profil utilisateur commun selon la revendication 1, **caractérisé en ce que** le ou les paramètres représentatifs sont le profil utilisateur commun utilisé par le fournisseur de service.

4. Procédé d'adaptation de profil utilisateur commun selon l'une quelconque des revendications 1 à 3, **caractérisé en ce que** l'étape de corrélation intègre une fonction d'intersection d'au moins certaines caractéristiques de profils utilisateurs.

5. Procédé d'adaptation de profil utilisateur commun selon l'une quelconque des revendications 1 à 4, **caractérisé en ce que** l'étape de corrélation intègre une fonction d'exclusion d'au moins certaines caractéristiques de profils utilisateurs en cas de présence de profils utilisateurs prioritaires.

6. Procédé d'adaptation de profil utilisateur commun selon l'une quelconque des revendications 1 à 5, **caractérisé en ce que** l'étape de corrélation intègre une fonction de calcul de barycentre d'au moins certaines caractéristiques de profils utilisateurs.

7. Procédé d'adaptation de profil utilisateur commun utilisé par un fournisseur de service audio et/ou vidéo diffusé sur un terminal commun (4) pour personnaliser le service fourni, comprenant :
- une étape de détection d'au moins un nouveau terminal (5, 6 ou 7) dans le voisinage du terminal commun;
- une étape de validation d'au moins un nouveau terminal détecté à au moins la première condition qu'il soit destiné à rester au voisinage du terminal commun pendant une durée compatible avec la personnalisation du service fourni ;
- une étape de détermination d'un ou de plusieurs profils utilisateurs correspondant à un ou plusieurs nouveaux terminaux validés;
- une étape d'utilisation, par le fournisseur de service, d'un nouveau profil utilisateur commun préalablement stocké correspondant à l'ensemble des terminaux encore validés, pour modifier la personnalisation du service fourni.

8. Procédé d'adaptation de profil utilisateur commun selon l'une quelconque des revendications 1 à 7, **caractérisé en ce que** d'une part l'étape de détection correspond à une détection passive de la part du terminal détecté et d'autre part l'étape de validation est réalisée si ledit terminal détecté reste détectable pendant une période de temps prédéterminée.

9. Procédé d'adaptation de profil utilisateur commun selon l'une quelconque des revendications 1 à 7, **caractérisé en ce que** d'une part l'étape de détection correspond à une signalisation active de la part du terminal détecté et d'autre part l'étape de validation est alors automatiquement réalisée.

10. Procédé d'adaptation de profil utilisateur commun selon l'une quelconque des revendications précédentes, **caractérisé en ce que** le service est un service au moins vidéo.

11. Procédé d'adaptation de profil utilisateur commun selon la revendication 10, **caractérisé en ce que** le service vidéo comprend un envoi de séquence publicitaire vidéo au cours d'une émission télévisée.

12. Procédé d'adaptation de profil utilisateur commun selon la revendication 10 ou la revendication 11, **caractérisé en ce que** le service vidéo comprend un envoi de questions vidéo interactives au cours d'une émission télévisée.

13. Procédé d'adaptation de profil utilisateur commun selon l'une quelconque des revendications 1 à 12, **caractérisé en ce que** l'étape de validation vérifie aussi une deuxième condition de nombre minimum, strictement supérieur à un, de nouveaux terminaux vérifiant la première condition.

14. Procédé d'adaptation du profil utilisateur commun selon l'une quelconque des revendications 1 à 12, **caractérisé en ce que** l'étape de validation vérifie aussi une deuxième condition de proportion minimum de nouveaux terminaux vérifiant la première condition par rapport à l'ensemble des terminaux constituant le profil utilisateur commun utilisé par le fournisseur de service.

15. Procédé d'adaptation de profil utilisateur commun utilisé par un fournisseur de service audio et/ou vidéo diffusé sur un terminal commun (4) pour personnaliser le service fourni, comprenant:
- une étape de détection de la disparition, d'au moins un terminal (5, 6 ou 7), du voisinage du terminal commun;
- une étape de validation d'au moins un terminal détecté disparu à au moins la première condition qu'il soit destiné à rester hors du voisinage du terminal commun pendant une durée compatible avec la personnalisation du service fourni;
- une étape de corrélation du ou des profils utilisateurs correspondant à des terminaux destinés à rester au voisinage du terminal commun pendant une durée compatible avec la personnalisation du service fourni de manière à obtenir un nouveau profil utilisateur commun ;
- une étape d'utilisation, par le fournisseur de service, du nouveaux profil utilisateur commun au moins si le nouveau profil utilisateur commun est suffisamment différent du profil utilisateur commun utilisé par le fournisseur de service, pour modifier la personnalisation du service fourni.

16. Procédé d'adaptation de profil utilisateur commun utilisé par un fournisseur de service audio et/ou vidéo diffusé sur un terminal commun (4) pour personnaliser le service fourni; comprenant:
- une étape de détection de la disparition, d'au moins un terminal (5, 6 ou 7), du voisinage du terminal commun;
- une étape de validation d'au moins un terminal détecté disparu à au moins la première condition qu'il soit destiné à rester hors du voisinage du terminal commun pendant une durée compatible avec la personnalisation du service fourni ;
- une étape d'utilisation, par le fournisseur de service, d'un nouveau profil utilisateur commun préalablement stocké correspondant à l'ensemble des terminaux encore destinés à rester au voisinage du terminal commun pendant une durée compatible avec la personnalisation du service fourni, pour modifier la personnalisation du service fourni.

17. Serveur d'application comprenant à la fois un module adapté à la mise en oeuvre du procédé d'adaptation de profil utilisateur commun utilisé par un fournisseur de service audio et/ou vidéo diffusé sur un terminal commun pour personnaliser le service fourni selon la revendication 1 et un module adapté à la mise en oeuvre du procédé d'adaptation de profil utilisateur commun utilisé par un fournisseur de service audio et/ou vidéo diffusé sur un terminal commun pour personnaliser le service fourni selon la revendication 15.

18. Serveur d'application comprenant à la fois un module adapté à la mise en oeuvre du procédé d'adaptation de profil utilisateur commun utilisé par un fournisseur de service audio et/ou vidéo diffusé sur un terminal commun pour personnaliser le service fourni selon la revendication 7 et un module adapté à la mise en oeuvre du procédé d'adaptation de profil utilisateur commun utilisé par un fournisseur de service audio et/ou vidéo diffusé sur un terminal commun pour personnaliser le service fourni selon la revendication 16.

## Claims

1. Method for adapting the common user profile used by a service provider of audio and/or video broadcast on a common terminal (4) to customize the service provided, including:
- a step of detecting at least one new terminal (5, 6 or 7) in the neighborhood of the common terminal;
- a step of enabling at least one new terminal detected on at least one first condition that it is to remain in the neighborhood of the common terminal for a duration compatible with the customization of the service provided;
- a step of determining one or more user profiles corresponding to one or more new enabled terminals;
- a step of correlating one or more predetermined profiles with one or more parameters representing the common profile used by the service provider so as to obtain a new common user profile;
- a step of implementation, by the service provider, of said new common user profile at least if the new common user profile is sufficiently different from the common user profile used by the service provider, to modify the customization of the service provided.

2. Method for adapting the common user profile according to claim 1, **characterized in that** the representative parameter(s) are the user profile(s) of the terminals which make up the common user profile used by the service provider.

3. Method for adapting the common user profile according to claim 1, **characterized in that** the representative parameter(s) are the common user profile used by the service provider.

4. Method for adapting the common user profile according to any of claims 1 to 3, **characterized in that** the correlation step includes a function for the intersection of at least certain user profile characteristics.

5. Method for adapting the common user profile according to any of claims 1 to 4, **characterized in that** the correlation step includes a function for the exclusion of at least certain user profile characteristics if priority user profiles are present.

6. Method for adapting the common user profile according to any of claims 1 to 5, **characterized in that** the correlation step includes a function for the calculation of the barycenter of at least certain user profile characteristics.

7. Method for adapting the common user profile used by a service provider of audio and/or video broadcast on a common terminal (4) to customize the service provided, including:
- a step of detecting at least one new terminal (5, 6 or 7) in the neighborhood of the common terminal;
- a step of enabling at least one new terminal detected on at least one first condition that it is to remain in the neighborhood of the common terminal for a duration compatible with the customization of the service provided;
- a step of determining one or more user profiles corresponding to one or more new enabled terminals;
- a step of implementation, by the service provider, of a new previously-stored common user profile corresponding to all terminals still enabled, to modify the customization of the service provided.

8. Method for adapting the common user profile according to any of claims 1 to 7, **characterized in that** the detection step corresponds to a passive detection for the detected terminal and the enabling step is carried out if said detected terminal remains detectable for a predetermined period of time.

9. Method for adapting the common user profile according to any of claims 1 to 7, **characterized in that** the detection step corresponds to an active signaling from the detected terminal and the enabling step is then carried out automatically.

10. Method for adapting the common user profile according to any of the previous claims, **characterized in that** the service is at least a video service.

11. Method for adapting the common user profile according to claim 10, **characterized in that** the video service includes the sending of a video advertising sequence during a televised transmission.

12. Method for adapting the common user profile according to claim 10 or claim 11, **characterized in that** the video service includes the sending of interactive video questions during a televised transmission.

13. Method for adapting the common user profile according to any of claims 1 to 12, **characterized in that** the enabling step also verifies a second condition of a minimum number, strictly greater than one, of new terminals verifying the first condition.

14. Method for adapting the common user profile according to any of claims 1 to 12, **characterized in that** the enabling step also verifies a second condition of a minimum proportion of new terminals verifying the first condition in relation to all terminals which make up the common user profile used by the service provider.

15. Method for adapting the common user profile used by a service provider of audio and/or video broadcast on a common terminal (4) to customize the service provided, including:
- a step of detecting the disappearance, of at least one terminal (5, 6 or 7), from the neighborhood of the common terminal;
- a step of enabling at least one terminal detected as disappeared on at least one first condition that it is to remain outside the neighborhood of the common terminal for a duration compatible with the customization of the service provided;
- a step of correlating one or more user profiles corresponding to terminals to remain in the neighborhood of the common terminal for a duration compatible with the customization of the service provided so as to obtain a new common user profile;
- a step of implementation, by the service provider, of said new common user profile at least if the new common user profile is sufficiently different from the common user profile used by the service provider, to modify the customization of the service provided.

16. Method for adapting the common user profile used by a service provider of audio and/or video broadcast on a common terminal (4) to customize the service provided, including:
- a step of detecting the disappearance, of at least one terminal (5, 6 or 7), from the neighborhood of the common terminal;
- a step of enabling at least one terminal detected as disappeared on at least one first condition that it is to remain outside the neighborhood of the common terminal for a duration compatible with the customization of the service provided;
- a step of implementation, by the service provider, of a new previously-stored common user profile corresponding to all terminals still to remain in the neighborhood of the common terminal for a duration compatible with the customization of the service provided, to modify the customization of the service provided.

17. Application server including both a module adapted to the implementation of the method for adapting the common user profile used by a service provider of audio and/or video broadcast on a common terminal to customize the service provided according to claim 1 and a module adapted to the implementation of the method for adapting the common user profile used by a service provider of audio and/or video broadcast on a common terminal to customize the service provided according to claim 15.

18. Application server including both a module adapted to the implementation of the method for adapting the common user profile used by a service provider of audio and/or video broadcast on a common terminal to customize the service provided according to claim 7 and a module adapted to the implementation of the method for adapting the common user profile used by a service provider of audio and/or video broadcast on a common terminal to customize the service provided according to claim 16.

## Patentansprüche

1. Verfahren zur Anpassung eines von einem Anbieter von auf einem gemeinsamen Endgerät (4) ausgestrahlten Audio- und/oder Videodiensten benutzten gemeinsamen Benutzerprofils, um den bereitgestellten Dienst benutzerorientiert zu gestalten, umfassend:
- Einen Schritt des Erkennens mindestens eines neuen Endgeräts (5, 6 oder 7) in der Nachbarschaft des gemeinsamen Endgeräts;
- einen Schritt des Validierens mindestens eines erkannten neuen Endgeräts, unter zumindest der ersten Bedingung, dass es dazu bestimmt ist, während einer mit der benutzerorientierten Gestaltung des bereitgestellten Dienstes kompatiblen Dauer in der Nachbarschaft des gemeinsamen Endgeräts zu verbleiben;
- einen Schritt des Bestimmens eines oder mehrerer Benutzerprofile, welche einem oder mehreren validierten neuen Endgeräten entsprechen;
- einen Schritt des Korrelierens des oder der bestimmten Benutzerprofile mit einem oder mehreren Parametern, welche für das vom Diensteanbieter benutzte gemeinsame Benutzerprofil repräsentatif sind, um ein neues gemeinsames Benutzerprofil zu erhalten;
- einen Schritt der Verwendens, durch den Diensteanbieter, des neuen gemeinsamen Benutzerprofils, zumindest, wenn sich das neue gemeinsame Benutzerprofil ausreichend von dem vom Diensteanbieter verwendenten gemeinsamen Benutzerprofil unterscheidet, um die benutzerorientierte Gestaltung des bereitgestellten Dienstes zu ändern.

2. Verfahren zur Anpassung eines gemeinsamen Benutzerprofils nach Anspruch 1, **dadurch gekennzeichnet, dass** der oder die repräsentativen Parameter das oder die Benutzerprofile der Endgeräte sind, welche das von dem Diensteanbieter verwendete gemeinsame Benutzerprofil bilden.

3. Verfahren zur Anpassung eines gemeinsamen Benutzerprofils nach Anspruch 1, **dadurch gekennzeichnet, dass** der oder die repräsentativen Parameter das vom Diensteanbieter verwendete gemeinsame Benutzerprofil sind.

4. Verfahren zur Anpassung eines gemeinsamen Benutzerprofils nach einem beliebigen der Ansprüche 1 bis 3, **dadurch gekennzeichnet, dass** der Schritt des Korrelierens eine Kreuzfunktion zumindest bestimmter Merkmale von Benutzerprofilen integriert.

5. Verfahren zur Anpassung eines gemeinsamen Benutzerprofils nach einem beliebigen der Ansprüche 1 bis 4, **dadurch gekennzeichnet, dass** der Schritt des Korrelierens eine Inhibitionsfunktion zumindest bestimmter Merkmale von Benutzerprofilen integriert, wenn vorrangige Benutzerprofile bestehen.

6. Verfahren zur Anpassung eines gemeinsamen Benutzerprofils nach einem beliebigen der Ansprüche 1 bis 5, **dadurch gekennzeichnet, dass** der Schritt des Korrelierens eine Schwerpunktberechnungsfunktion zumindest bestimmter Merkmale von Benutzerprofilen integriert.

7. Verfahren zur Anpassung eines von einem Anbieter von auf einem gemeinsamen Endgerät (4) ausgestrahlten Audio- und/oder Videodiensten benutzten gemeinsamen Benutzerprofils, um den bereitgestellten Dienst benutzerorientiert zu gestalten, umfassend:
- Einen Schritt des Erkennens mindestens eines neuen Endgeräts (5, 6 oder 7) in der Nachbarschaft des gemeinsamen Endgeräts;
- einen Schritt des Validierens mindestens eines erkannten neuen Endgeräts, unter zumindest der ersten Bedingung, dass es dazu bestimmt ist, während einer mit der benutzerorientierten Gestaltung des bereitgestellten Dienstes kompatiblen Dauer in der Nachbarschaft des gemeinsamen Endgeräts zu verbleiben;
- einen Schritt des Bestimmens eines oder mehrerer Benutzerprofile, welche einem oder mehreren validierten neuen Endgeräten entsprechen;
- einen Schritt der Verwendens, durch den Diensteanbieter, eines neuen gemeinsamen Benutzerprofils, welches zuvor gespeichert wurde und allen noch validierten Endgeräten entspricht, um die benutzerorientierte Gestaltung des bereitgestellten Dienstes zu ändern.

8. Verfahren zur Anpassung eines gemeinsamen Benutzerprofils nach einem beliebigen der Ansprüche 1 bis 7, **dadurch gekennzeichnet, dass** einerseits der Schritt des Erkennens einer passiven Erkennung durch das erkannte Endgeräts entspricht, und andererseits der Schritt des Validierens ausgeführt wird, wenn das erkannte Endgerät während einer vorbestimmten Zeitspanne erkennbar bleibt.

9. Verfahren zur Anpassung eines gemeinsamen Benutzerprofils nach einem beliebigen der Ansprüche 1 bis 7, **dadurch gekennzeichnet, dass** einerseits der Schritt des Erkennens einer aktiven Signalisierung durch das erkannte Endgerät entspricht, und andererseits der Schritt des Validierens anschließend automatisch erfolgt.

10. Verfahren zur Anpassung eines gemeinsamen Benutzerprofils nach einem beliebigen der vorstehenden Ansprüche, **dadurch gekennzeichnet, dass** der Dienst mindestens ein Videodienst ist.

11. Verfahren zur Anpassung eines gemeinsamen Benutzerprofils nach Anspruch 10, **dadurch gekennzeichnet, dass** der Videodienst das Ausstrahlen einer Video-Werbesequenz während einer Fernsehsendung umfasst.

12. Verfahren zur Anpassung eines gemeinsamen Benutzerprofils nach Anspruch 10 oder Anspruch 11, **dadurch gekennzeichnet, dass** der Videodienst das Ausstrahlen von interaktiven Video-Fragen während einer Fernsehsendung umfasst.

13. Verfahren zur Anpassung eines gemeinsamen Benutzerprofils nach einem beliebigen der Ansprüche 1 bis 12, **dadurch gekennzeichnet, dass** der Schritt des Validierens ebenfalls eine zweite Bedingung einer Mindestanzahl, welche streng höher als Eins ist, von neuen Endgeräten, welche die erste Bedingung prüfen, überprüft.

14. Verfahren zur Anpassung eines gemeinsamen Benutzerprofils nach einem beliebigen der Ansprüche 1 bis 12, **dadurch gekennzeichnet, dass** der Schritt des Validierens ebenfalls eine zweite Bedingung einer minimalen Verhältnisses von neuen Endgeräten, welche die erste Bedingung im Verhältnis zu allen Endgeräten, welche das vom Diensteanbieter benutzte gemeinsame Benutzerprofil bilden, prüfen, überprüft.

15. Verfahren zur Anpassung eines von einem Anbieter von auf einem gemeinsamen Endgerät (4) ausgestrahlten Audio- und/oder Videodiensten benutzten gemeinsamen Benutzerprofils, um den bereitgestellten Dienst benutzerorientiert zu gestalten, umfassend:
- Einen Schritt des Erkennens des Verschwindens mindestens eines Endgeräts (5, 6 oder 7) aus der Nachbarschaft des gemeinsamen Endgeräts;
- einen Schritt des Validierens mindestens eines als verschwunden erkannten Endgeräts, unter zumindest der ersten Bedingung, dass es dazu bestimmt ist, während einer mit der benutzerorientierten Gestaltung des bereitgestellten Dienstes kompatiblen Dauer außerhalb der Nachbarschaft des gemeinsamen Endgeräts zu verbleiben;
- einen Schritt des Korrelierens des oder der Benutzerprofile, welche Endgeräten entsprechen, die dazu bestimmt sind, während einer mit der benutzerorientierten Gestaltung des bereitgestellten Dienstes kompatiblen Dauer in der Nachbarschaft des gemeinsamen Endgeräts zu verbleiben, um ein neues gemeinsames Benutzerprofil zu erhalten;
- einen Schritt der Verwendens, durch den Diensteanbieter, des neuen gemeinsamen Benutzerprofils, zumindest, wenn sich das neue gemeinsame Benutzerprofil ausreichend von dem vom Diensteanbieter verwendeten gemeinsamen Benutzerprofil unterscheidet, um die benutzerorientierte Gestaltung des bereitgestellten Dienstes zu ändern.

16. Verfahren zur Anpassung eines von einem Anbieter von auf einem gemeinsamen Endgerät (4) ausgestrahlten Audio- und/oder Videodiensten benutzten gemeinsamen Benutzerprofils, um den bereitgestellten Dienst benutzerorientiert zu gestalten, umfassend:
- Einen Schritt des Erkennens des Verschwindens mindestens eines Endgeräts (5, 6 oder 7) aus der Nachbarschaft des gemeinsamen Endgeräts;
- einen Schritt des Validierens mindestens eines als verschwunden erkannten Endgeräts, unter zumindest der ersten Bedingung, dass es dazu bestimmt ist, während einer mit der benutzerorientierten Gestaltung des bereitgestellten Dienstes kompatiblen Dauer außerhalb der Nachbarschaft des gemeinsamen Endgeräts zu verbleiben;
- einen Schritt der Verwendens, durch den Diensteanbieter, eines neuen gemeinsamen Benutzerprofils, welches zuvor gespeichert wurde und allen noch für eine mit der benutzerorientierten Gestaltung des bereitgestellten Dienstes kompatiblen Dauer zum Verbleiben in der Nachbarschaft des gemeinsamen Endgeräts bestimmten Endgeräten entspricht, um die benutzerorientierte Gestaltung des bereitgestellten Dienstes zu ändern.

17. Anwendungsserver, der sowohl ein Modul, welches dazu ausgelegt ist, das Verfahren zur Anpassung eines von einem Anbieter von auf einem gemeinsamen Endgerät ausgestrahlten Audio- und/oder Videodiensten benutzten gemeinsamen Benutzerprofils umzusetzen, um den gemäß Anspruch 1 bereitgestellten Dienst benutzerorientiert zu gestalten, als auch ein Modul, welches dazu ausgelegt ist, das Verfahren zur Anpassung eines gemeinsamen Benutzerprofils, welches von einem Anbieter von auf einem gemeinsamen Endgerät ausgestrahlten Audio- und/oder Videodiensten zur benutzerorientierten Gestaltung des bereitgestellten Dienstes gemäß Anspruch 15 verwendet wird, umfasst.

18. Anwendungsserver, der sowohl ein Modul, welches dazu ausgelegt ist, das Verfahren zur Anpassung eines von einem Anbieter von auf einem gemeinsamen Endgerät ausgestrahlten Audio- und/oder Videodiensten benutzten gemeinsamen Benutzerprofils umzusetzen, um den gemä,8 Anspruch 7 bereitgestellten Dienst benutzerorientiert zu gestalten, als auch ein Modul, welches dazu ausgelegt ist, das Verfahren zur Anpassung eines gemeinsamen Benutzerprofils, welches von einem Anbieter von auf einem gemeinsamen Endgerät ausgestrahlten Audio- und/oder Videodiensten zur benutzerorientierten Gestaltung des bereitgestellten Dienstes gemäß Anspruch 16 verwendet wird, umfasst.
